# EUROPÄISCHE PATENTSCHRIFT

(11) **EP 1 296 032 B1**
(45) Veröffentlichungstag und Bekanntmachung des Hinweises auf die Patenterteilung: **06.10.2004**
(21) Anmeldenummer: 02016625.2
(22) Anmeldetag: 25.07.2002
(51) Int. Cl.: F01N 9/00, F01N 3/023

(54) **Verfahren und Vorrichtung zur Steuerung eines Abgasnachbehandlungssystems**
Method and device for controlling an exhaust gas aftertreatment system
Procédé et dispositif de commande d'un système de retraitement des gaz d'échappement

(30) Priorität: 20.09.2001 DE 10146316
(43) Veröffentlichungstag der Anmeldung: 26.03.2003
(73) Patentinhaber: ROBERT BOSCH GMBH, 70442 Stuttgart (DE)
(72) Erfinder: Plote, Holger, 70736 Fellbach-Oeffingen (DE); Krautter, Andreas, 71711 Steinheim (DE); Walter, Michael, 70806 Kornwestheim (DE); Sojka, Juergen, 70839 Gerlingen (DE)

(56) Entgegenhaltungen:
- EP-A- 1 092 847
- DE-A- 10 014 224
- DE-A- 19 933 988
- PATENT ABSTRACTS OF JAPAN vol. 009, no. 174 (P-374), 19. Juli 1985 (1985-07-19) & JP 60 047937 A (MITSUBISHI JIDOSHA KOGYO KK), 15. März 1985 (1985-03-15)
- PATENT ABSTRACTS OF JAPAN vol. 1995, no. 06, 31. Juli 1995 (1995-07-31) & JP 07 077028 A (TOYOTA AUTOM LOOM WORKS LTD), 20. März 1995 (1995-03-20)
- PATENT ABSTRACTS OF JAPAN vol. 1998, no. 14, 31. Dezember 1998 (1998-12-31) & JP 10 259711 A (MITSUBISHI AUTOMOB ENG CO LTD;MITSUBISHI MOTORS CORP), 29. September 1998 (1998-09-29)

## Beschreibung

### Stand der Technik

Die Erfindung geht aus von einem Verfahren zur Steuerung eines Abgasnachbehandlungssystems einer Brennkraftmaschine und eine Vorrichtung zur Durchführung des Verfahrens nach der Gattung der unabhängigen Ansprüche.

Zur Verbesserung der Emissionen werden Fahrzeuge, insbesondere Fahrzeuge mit Dieselmotoren, mit Partikelfiltern ausgestattet. Zur Steuerung solcher Abgasnachbehandlungssysteme und/oder zur Überwachung des Zustands solcher Abgasnachbehandlungssysteme wird üblicherweise eine Zustandsgröße ermittelt, die den Beladungszustand des Abgasnachbehandlungssystems oder einzelner Komponenten, wie beispielsweise des Partikelfilters, charakterisiert. Die Kontrolle der Filterbeladung bei Partikelfiltern und die Regenerationsüberwachung erfolgt vorzugsweise mit Drucksensoren, da das Druckgefälle über den Filter Rückschlüsse auf die im Filter angesammelte Rußmasse ermöglicht.

Eine gattungsgemäße Vorgehensweise ist beispielsweise in der JP 60 047937 A beschrieben. Bei der Ermittlung der Zustandsgröße, die ein Maß für den Beladungszustand eines Partikelfilters ist, wird zunächst die am Partikelfilter auftretende Druckdifferenz berücksichtigt, die mit einem Druckssensor vor und nach dem Partikelfilter ermittelt wird. Weiterhin wird der von einem Luftmassensensor in die Brennkraftmaschine fließende Luftmassenstrom ermittelt. Berücksichtigt wird weiterhin die Dichte des Abgases, die anhand einer Temperaturmessung und des Luftmassenstroms ermittelt werden kann.

Der Erfindung liegt die Aufgabe zugrunde, ein Verfahren zur Steuerung eines Abgasnachbehandlungssystems einer Brennkraftmaschine und eine Vorrichtung zur Durchführung des Verfahrens anzugeben, bei denen eine den Zustand des Abgasnachbehandlungssystems charakterisierende Zustandsgröße mit möglichst hoher Genauigkeit ermittelt werden kann.

Die Aufgabe wird durch die in den unabhängigen Ansprüchen angegebenen Merkmale jeweils gelöst.

Vorteile der Erfindung

Die erfindungsgemäße Vorgehensweise sieht zunächst die Ermittlung der Zustandsgröße in Abhängigkeit vom Differenzdruck am Abgasnachbehandlungssystem und in Abhängigkeit von der Temperatur des Abgases vor. Erfindungsgemäß ist vorgesehen, dass die Zustandsgröße weiterhin in Abhängigkeit von der Viskosität des Abgases korrigiert wird und dass die Viskosität in Abhängigkeit von der Abgastemperatur berücksichtigt wird. Durch die Einbeziehung der Viskosität des Abgases, die ein Maß für die innere Reibung des Abgases ist, sowie deren Temperaturabhängigkeit kann die den Zustand des Abgasnachbehandlungssystems charakterisierende Zustandsgröße mit vergleichsweise hoher Genauigkeit ermittelt werden.

Vorteilhafte Weiterbildungen und Ausgestaltungen der erfindungsgemäßen Vorgehensweise ergeben sich aus abhängigen Ansprüchen und aus der folgenden Beschreibung.

### Zeichnung

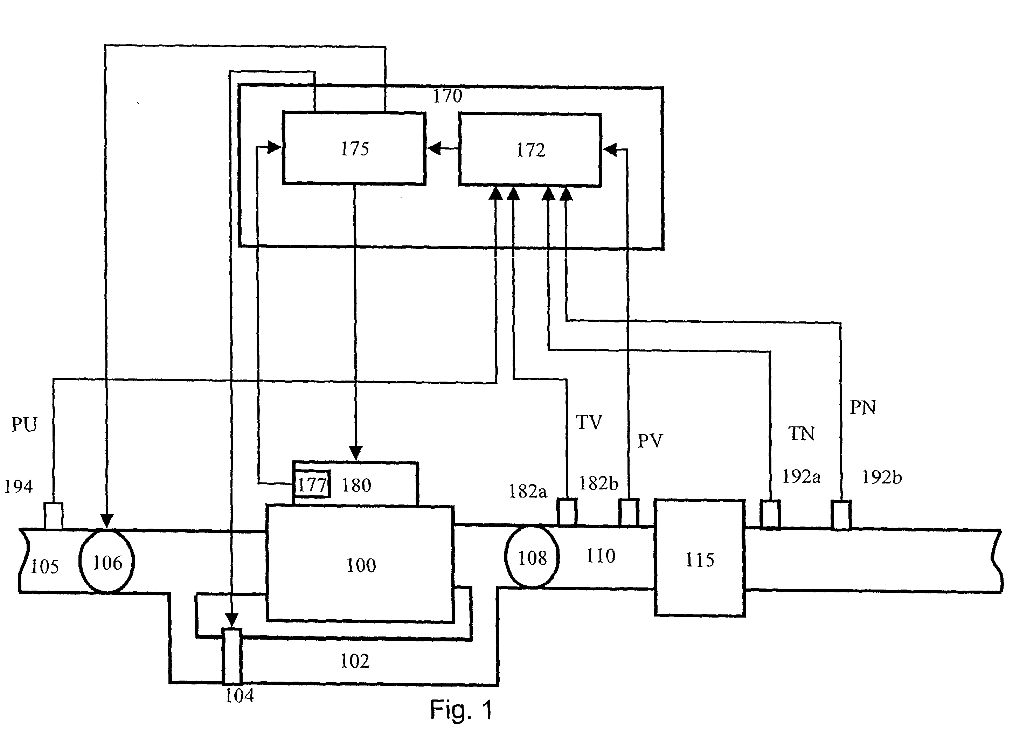

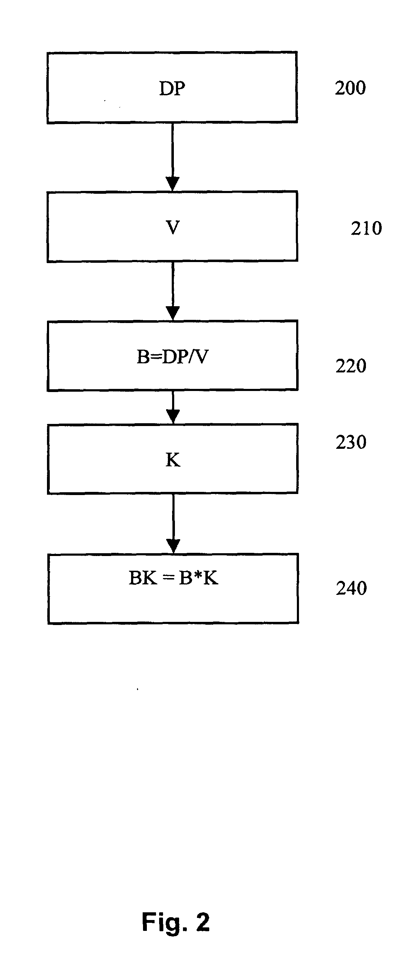

Figur 1 zeigt ein Blockdiagramm eines Systems zur Steuerung einer Brennkraftmaschine und Figur 2 zeigt ein Flussdiagramm zur Verdeutlichung einer erfindungsgemäßen Vorgehensweise.

### Beschreibung der Ausführungsbeispiele

In Figur 1 sind die wesentlichen Elemente eines Abgasnachbehandlungssystems 115 einer Brennkraftmaschine 100 dargestellt. Der Brennkraftmaschine 100 wird über eine Frischluftleitung 105 Frischluft zugeführt. Die Abgase der Brennkraftmaschine 100 gelangen über eine Abgasleitung 110 in die Umgebung. In der Abgasleitung 110 ist das Abgasnachbehandlungssystem 115angeordnet. Hierbei kann es sich um einen Katalysator und/oder um einen Partikelfilter handeln. Des weiteren ist es möglich, dass mehrere Katalysatoren für unterschiedliche Schadstoffe oder Kombinationen von wenigstens einem Katalysator und einem Partikelfilter vorgesehen sind.

Desweiteren ist eine Steuereinheit 170 vorgesehen, die wenigstens eine Motorsteuereinheit 175 und eine Abgasnachbehandlungssteuereinheit 172 umfaßt. Die Motorsteuereinheit 175 beaufschlagt ein Kraftstoffzumesssystem 180 mit Ansteuersignalen. Die Abgasnachbehandlungssteuereinheit 172 beaufschlagt die Motorsteuereinheit 175 mit Ansteuersignalen.

Desweiteren können verschiedene Sensoren vorgesehen sein, die die Abgasnachbehandlungssteuereinheit und die Motorsteuereinheit mit Signalen versorgen. So ist wenigstens ein erster Sensor 194 vorgesehen, der Signale liefert, die den Druck PU der Umgebungsluft charakterisiert. Ein zweiter Sensor 177 liefert Signale, die den Zustand des Kraftstoffzumesssystems 180 charakterisieren. Sensoren 182a und 182b liefern Signale, die den Zustand des Abgases vor dem Abgasnachbehandlungssystem charakterisieren. Sensoren 192a und 192b liefern Signale, die den Zustand des Abgases nach dem Abgasnachbehandlungssystem charakterisieren

Vorzugsweise werden Sensoren 182a und 192a, die Temperaturwerte TV und/oder TN und/oder Sensoren 182b und 192b, die Druckwerte PV und/oder PN erfassen verwendet. Desweiteren können auch Sensoren eingesetzt werden, die die chemische Zusammensetzungen des Abgases und/oder der Frischluft charakterisieren. Hierbei handelt es sich bspw. um Lambdasensoren, NOX-Sensoren oder HC-Sensoren.

Mit den Ausgangssignalen der Sensoren 182a, 182b, 192a, 192b und 194 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungsoder Motorbetriebszustände charakterisieren.

Bei der dargestellten Ausführungsform ist in der Ansaugleitung 105 ein Verdichter 106 und in der Abgasleitung 110 eine Turbine 108 angeordnet. Die Turbine wird durch das durchströmende Abgas angetrieben und treibt über eine nicht dargestellte Welle den Verdichter 106 an. Durch geeignete Ansteuerung kann die Luftmenge, die der Verdichter verdichtet, gesteuert werden.

Ferner ist die Leitung 110 für eine Abgasrückführleitung 102 mit der Ansaugleitung 105 verbunden. In der Abgasrückführleitung 102 ist ein Abgasrückführventil 104 angeordnet, das ebenfalls von der Steuereinheit 175 ansteuerbar ist.

Bei der dargestellten Ausführungsform ist sowohl eine Abgasrückführung als auch ein steuerbarer Abgasturbolader vorgesehen. Erfindungsgemäß kann auch lediglich eine Abgasrückführung oder lediglich ein gesteuerter Abgasturbolader vorgesehen sein.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Partikelfilters, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie eingesetzt werden, bei Abgasnachbehandlungssystemen, bei denen ein Katalysator und ein Partikelfilter kombiniert sind. Desweiteren ist sie einsetzbar, bei Systemen die lediglich mit einem Katalysator ausgestattet sind.

Ausgehend von den vorliegenden Sensorsignalen berechnet die Motorsteuerung 175 Ansteuersignale zur Beaufschlagung des Kraftstoffzumesssystems 180. Dieses misst dann die entsprechende Kraftstoffmenge der Brennkraftmaschine 100 zu. Bei der Verbrennung können im Abgas Partikel entstehen. Diese werden von dem Partikelfilter im Abgasnachbehandlungssystem 115 aufgenommen. Im Laufe des Betriebs sammeln sich in dem Partikelfilter 115 entsprechende Mengen von Partikeln an. Dies führt zu einer Beeinträchtigung der Funktionsweise des Partikelfilters und/oder der Brennkraftmaschine. Deshalb ist vorgesehen, dass in bestimmten Abständen bzw. wenn der Partikelfilter einen bestimmten Beladungszustand erreicht hat, ein Regenerationsvorgang eingeleitet wird. Diese Regeneration kann auch als Sonderbetrieb bezeichnet werden.

Der Beladungszustand wird vorzugsweise anhand verschiedener Sensorsignale erkannt. Insbesondere wird der Differenzdruck zwischen dem Eingang und dem Ausgang des Partikelfilters 115 ausgewertet.

Erkennt die Abgasnachbehandlungssteuereinheit, dass der Partikelfilter einen bestimmten Beladungszustand erreicht hat, so wird die Regeneration initialisiert. Zur Regeneration des Partikelfilters stehen verschiedene Möglichkeiten zur Verfügung.

Üblicherweise ist vorgesehen, dass der Beladungszustand ausgehend von dem Differenzdruck über den Partikelfilter bestimmt wird. Durch Vergleich mit einem Schwellwert werden die unterschiedlichen Zustände erkannt und abhängig vom erkannten Beladungszustand die Regeneration eingeleitet.

Bevorzugt wird als Größe, die den Beladungszustand charakterisiert, der Strömungswiderstand des Partikelfilters verwendet. Der Strömungswiderstand wird im wesentlichen ausgehend von der Druckdifferenz über den Partikelfilter und dem Volumenstrom, der durch den Partikelfilter strömt, bestimmt. Alternativ kann auch vorgesehen sein, dass der Differenzdruck abhängig vom Betriebszustand der Brennkraftmaschine, insbesondere vom aktuellen Lastpunkt der Brennkraftmaschine, bewertet wird. Vorzugsweise wird zur Bildung des Beladungszustandes B der Differenzdruck mit einer Größe, die vom Betriebszustand der Brennkraftmaschine, insbesondere des Lastpunkts, der wenigstens durch die Drehzahl und/oder die eingespritzte Kraftstoffmenge definiert ist, abhängt, multipliziert. Insbesondere ist vorgesehen, dass zur Bildung des Beladungszustandes B der Differenzdruck durch eine Größe, die vom Volumenstrom, der durch den Partikelfilter strömt, abhängt, dividiert wird.

Erfindungsgemäß wurde erkannt, dass die Druckdifferenz durch weitere Größen beeinflußt wird, die nicht vom Beladungszustand des Partikelfilters abhängen. Eine wesentliche Größe ist hierbei die Viskosität der Abgase. Diese weist eine wesentliche Abhängigkeit von der Temperatur der Abgase auf. Diese Abhängigkeit wird erfindungsgemäß berücksichtigt, in dem der Beladungszustand B mit einer temperaturabhängigen Größe multipliziert wird. Diese Größe ist vorzugsweise in einer Kennlinie, abhängig von der Temperatur des Abgases, abgelegt. Durch diese Multiplikation ergibt sich ein Wert für den Beladungszustand, der unabhängig von der Temperatur der Abgase ist.

In Figur 2 ist eine entsprechende Vorgehensweise anhand eines Flußdiagramms dargestellt. In einem ersten Schritt 200 wird der Differenzdruck DP zwischen dem Ein- und Ausgang des Partikelfilters 115 erfasst. Hierzu kann zum einen vorgesehen sein, dass ein Differenzdrucksensor verwendet wird oder dass zwei Absolutdrucksensoren 182b und 192b, die den Druck PV vor und den Druck PN nach dem Partikelfilter erfassen, verwendet werden.

In einem zweiten Schritt 210 wird der Volumenstrom V der Abgase, die durch den Partikelfilter strömen, bestimmt. Bei einer besonders vorteilhaften Ausgestaltung ist vorgesehen, dass dieser Wert V ausgehend von verschiedenen Betriebsparametern wie beispielsweise der Motordrehzahl N, der Luftmenge, die der Brennkraftmaschine zugeführt wird, der Last, und/oder einer die Last kennzeichnenden Größe, wie beispielsweise die Einspritzmenge, bestimmt wird.

In einem nächsten Schritt 220 wird ausgehend von dem Strömungswiderstand W und dem Differenzdruck DP der Beladungszustand B des Partikelfilter durch Division des Differenzdruckes durch den Abgasvolumenstrom ermittelt.

Im anschließenden Schritt 230 wird eine Konstante K ermittelt, die die Temperaturabhängigkeit der Viskosität des Abgases berücksichtigt. Diese Konstante K wird vorzugsweise abhängig von wenigstens der Temperatur des Abgases vorgegeben. Vorzugsweise wird hierzu die Temperatur TV der Abgase vor dem Partikelfilter, die Temperatur TN der Abgase nach dem Partikelfilter oder ein aus diesen berechneter Temperaturwert verwendet. Besonders vorteilhaft ist es, wenn die Temperatur der Abgase im Partikelfilter berechnet und/oder unmittelbar gemessen werden.

Im nächsten Schritt 240 wird ausgehend von dem Beladungszustand B und der Konstante K der temperaturkorrigierte Beladungszustand BK vorzugsweise durch Multiplikation ermittelt.

Dieser so ermittelte korrigierte Beladungszustand kann für vielfältige Aufgaben in Verbindung mit dem Abgasnachbehandlungssystem verwendet werden. Vorzugsweise erfolgt die Steuerung und/oder Regelung der Regeneration des Partikelfilters abhängig von diesem korrigierten Beladungszustand. Vorzugsweise wird die Regeneration eingeleitet, wenn der korrigierte Beladungszustand einen Schwellenwert übersteigt. Neben der Steuerung kann mit dem korrigierten Beladungszustand auch eine Überwachung der Steuerung und/oder Regelung erfolgen. Besonders vorteilhaft ist es, wenn der korrigierte Beladungszustand zur Überwachung des Abgasnachbehandlungssystems ausgewertet wird.

Von besonderer Bedeutung sind weiterhin die Realisierungen in Form eines Computerprogramms mit Programmcode-Mitteln und in Form eines Computerprogrammprodukts mit Programmcode-Mitteln. Das erfindungsgemäße Computerprogramm weist Programmcode-Mittel auf, um alle Schritte des erfindungsgemäßen Verfahrens durchzuführen, wenn das Programm auf einem Computer, insbesondere einem Steuergerät für eine Brennkraftmaschine eines Kraftfahrzeugs, ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs ausgeführt wird. In diesem Fall wird also die Erfindung durch einen Datenträger realisiert, so dass das erfindungsgemäße Verfahren ausgeführt werden kann, wenn das Programmprodukt bzw. der Datenträger in ein Steuergerät für eine Brennkraftmaschine insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher wie beispielsweise eine CD-ROM oder DVD.

## Patentansprüche

1. Verfahren zur Steuerung eines Abgasnachbehandlungssystems (115) einer Brennkraftmaschine (100), bei dem eine den Zustand des Abgasnachbehandlungssystems (115) charakterisierende Zustandsgröße (BK) ermittelt wird, die vom Differenzdruck (DP) am Abgasnachbehandlungssystem (115) abhängt, und bei dem die Temperatur des Abgases ermittelt wird, **dadurch gekennzeichnet, dass** die Zustandsgröße (BK) in Abhängigkeit von der Viskosität des Abgases korrigiert wird und dass die Viskosität in Abhängigkeit von der Abgastemperatur berücksichtigt wird.

2. Verfahren nach Anspruch 1, **dadurch gekennzeichnet, dass** bei der Ermittlung der Zustandsgröße (BK) der Betriebszustand der Brennkraftmaschine (100) berücksichtigt wird.

3. Verfahren nach Anspruch 2, **dadurch gekennzeichnet, dass** als Betriebszustand der Brennkraftmaschine (100) die Drehzahl (N) und/oder die eingespritzt Kraftstoffmenge vorgesehen sind.

4. Verfahren nach Anspruch 1, **dadurch gekennzeichnet, dass** bei der Ermittlung der Zustandsgröße (BK) der Volumenstrom des Abgases berücksichtigt wird.

5. Verfahren nach Anspruch 4, **dadurch gekennzeichnet, dass** der Volumenstrom des Abgases ausgehend von Betriebsparametern der Brennkraftmaschine (100) ermittelt wird.

6. Verfahren nach Anspruch 5, **dadurch gekennzeichnet, dass** als Betriebsparameter die Drehzahl (N) der Brennkraftmaschine (100) und/oder die der Brennkraftmaschine (100) zugeführte Luftmenge und/oder die eingespritzt Kraftstoffmenge herangezogen werden.

7. Verfahren nach Anspruch 1, **dadurch gekennzeichnet, dass** die Temperatur des Abgases ausgehend von einer Messung der Abgastemperatur mit wenigstens einem Temperatursensor (TV, TN) ermittelt wird.

8. Verfahren nach Anspruch 1, **dadurch gekennzeichnet, dass** das Abgasnachbehandlungssystem (115) wenigstens einen Katalysator und/oder ein Partikelfilter enthält.

9. Verfahren nach Anspruch 8, **dadurch gekennzeichnet, dass** die Zustandsgröße (BK) den Beladungszustand des Partikelfilters (115) charakterisiert und dass die Zustandsgröße (BK) zur Überwachung und/oder zur Überwachung einer Regeneration des Partikelfilters (115) verwendet wird.

## Claims

1. Method for controlling an exhaust gas aftertreatment system (115) of an internal combustion engine (100), in which a state variable (BK), which characterizes the state of the exhaust gas aftertreatment system (115) and is dependent on the differential pressure (DP) at the exhaust gas aftertreatment system (115), is determined, and in which the temperature of the exhaust gas is determined, **characterized in that** the state variable (BK) is corrected as a function of the viscosity of the exhaust gas, and **in that** the viscosity is taken into account as a function of the exhaust gas temperature.

2. Method according to Claim 1, **characterized in that** the operating state of the internal combustion engine (100) is taken into account during the determination of the state variable (BK).

3. Method according to Claim 2, **characterized in that** the engine speed (N) and/or the injected quantity of fuel are intended for use as the operating state of the internal combustion engine (100).

4. Method according to Claim 1, **characterized in that** the volumetric flow of the exhaust gas is taken into account during the determination of the state variable (BK).

5. Method according to Claim 4, **characterized in that** the volumetric flow of the exhaust gas is determined on the basis of operating parameters of the internal combustion engine (100).

6. Method according to Claim 5, **characterized in that** the operating parameters used are the engine speed (N) of the internal combustion engine (100) and/or the quantity of air fed to the internal combustion engine (100) and/or the injected quantity of fuel.

7. Method according to Claim 1, **characterized in that** the temperature of the exhaust gas is determined on the basis of a measurement of the exhaust gas temperature using at least one temperature sensor (TV, TN).

8. Method according to Claim 1, **characterized in that** the exhaust gas aftertreatment system (115) includes at least one catalytic converter and/or a particulate filter.

9. Method according to Claim 8, **characterized in that** the state variable (BK) characterizes the loading state of the particulate filter (115), and **in that** the state variable (BK) is used for monitoring and/or for monitoring of a regeneration of the particulate filter (115).

## Revendications

1. Procédé de commande d'un système de retraitement des gaz d'échappement (115) d'un moteur à combustion interne (100), selon lequel on calcule une grandeur d'état (BK) caractéristique de l'état du système de retraitement des gaz d'échappement (115), qui dépend de la pression différentielle (DP) régnant au niveau du système de retraitement des gaz d'échappement (115), et on calcule la température des gaz d'échappement,
**caractérisé en ce que**
la grandeur d'état (BK) est corrigée en fonction de la viscosité des gaz d'échappement et la viscosité est prise en compte en fonction de la température des gaz d'échappement.

2. Procédé selon la revendication 1,
**caractérisé en ce que**
l'état de fonctionnement du moteur à combustion interne (100) est pris en compte lors du calcul de la grandeur d'état (BK).

3. Procédé selon la revendication 2,
**caractérisé en ce que**
comme état de fonctionnement du moteur à combustion interne (100), on prend le régime (N) et/ou la quantité de carburant injectée.

4. Procédé selon la revendication 1,
**caractérisé en ce que**
le débit volumique des gaz d'échappement est pris en compte lors du calcul de la grandeur d'état (BK).

5. Procédé selon la revendication 4,
**caractérisé en ce que**
le débit volumique des gaz d'échappement est calculé à partir de paramètres de fonctionnement du moteur à combustion interne (100).

6. Procédé selon la revendication 5,
**caractérisé en ce que**
le régime (N) du moteur à combustion interne (100) et/ou la quantité d'air fournie au moteur à combustion interne (100) et/ou la quantité de carburant injectée sont utilisés comme paramètres de fonctionnement.

7. Procédé selon la revendication 1,
**caractérisé en ce que**
la température des gaz d'échappement est calculée à partir d'une mesure de la température des gaz d'échappement à l'aide d'au moins un capteur de température (TV, TN).

8. Procédé selon la revendication 1,
**caractérisé en ce que**
le système de retraitement des gaz d'échappement (115) contient au moins un catalyseur et/ou un filtre à particules.

9. Procédé selon la revendication 8,
**caractérisé en ce que**
la grandeur d'état (BK) caractérise l'état de charge du filtre à particules (115) et la grandeur d'état (BK) est utilisée pour le contrôle et/ou pour la surveillance d'une régénération du filtre à particules (115).
